# EUROPÄISCHE PATENTSCHRIFT

(11) **EP 1 733 610 B1**
(45) Veröffentlichungstag und Bekanntmachung des Hinweises auf die Patenterteilung: **08.06.2011**
(21) Anmeldenummer: 06115222.9
(22) Anmeldetag: 09.06.2006
(51) Int. Cl.: A01F 12/44

(54) **Radialgebläse für eine Reinigungseinrichtung für einen Mähdrescher**
Radial fan for a cleaning device of a combine
Soufflante radial pour un dispositif de nettoyage pour une moissonneuse-batteuse

(30) Priorität: 16.06.2005 DE 102005027726
(43) Veröffentlichungstag der Anmeldung: 20.12.2006
(73) Patentinhaber: Deere & Company, Moline, IL 61265-8098 (US)
(72) Erfinder: Weichholdt, Dirk, 57200, Sarreguemines (FR)
(74) Vertreter: Holst, Sönke

(56) Entgegenhaltungen:
- EP-A- 1 407 656
- DE-A1- 1 403 495
- DE-A1- 2 423 917
- DE-A1- 2 922 607
- DE-A1- 19 501 828

## Beschreibung

Die Erfindung betrifft ein Radialgebläse für eine Reinigungseinrichtung für einen Mähdrescher, mit mehreren Teilgebläsen, die jeweils in einem zugeordneten Gehäuse angeordnet sind, an das sich je ein Windkanal anschließt, der im Betrieb den vom Teilgebläse erzeugten Luftstrom zu der Reinigungseinrichtung leitet, wobei die Windkanäle Seitenwände aufweisen, die sich mit einer konvexen Krümmung an die Seitenwände der Gehäuse der Teilgebläse anschließen und Seitenwände benachbarter Windkanäle an ihrem der Reinigungseinrichtung zugewandten Ende untereinander verbunden sind.

### Stand der Technik

Radialgebläse dienen zur Beaufschlagung der Siebe und ggf. Fallstufen in Reinigungseinrichtungen selbst fahrender Mähdrescher mit Luftströmen. Der Luftstrom ermöglicht eine Trennung der schwereren Körner von leichteren Partikeln, wie Kaff und Spreu und sollte eine über die Breite der Reinigungseinrichtung möglichst gleichmäßige Intensität haben, damit auf der vollen Breite der Siebe die gewünschte Reinigungswirkung erzielt wird.

Neben Radialgebläsen mit einem sich über die Breite der Reinigungseinrichtung erstreckenden Gehäuse, in dem an einer rotierenden Welle mehrere in Umfangsrichtung zueinander versetzte Paddel (DE 504 189 A) oder sich näherungsweise über die Breite des Gehäuses erstreckende Paddel (EP 1 389 416 A) befestigt sind, wurden auch Radialgebläse vorgeschlagen, die sich aus mehreren, in getrennten Gehäusen nebeneinander angeordneten Teilgebläsen zusammensetzen. Die Teilgebläse umfassen auf einer alle Gehäuse durchdringenden Welle angeordnete Paddel. Die Gehäuse umfassen der Welle benachbarte, seitliche Einlassöffnungen und sich in radialer Richtung von den Paddeln in Richtung auf die Reinigungseinrichtung zu erstreckende Windkanäle.

Ein derartiges Radialgebläse ist in der DE 29 22 607 C beschrieben. Die Seitenwände der Windkanäle erstrecken sich geradlinig nach außen und schließen mit den seitlichen Gehäusewänden jeweils stumpfe Winkel ein, so dass der Querschnitt der Windkanäle sich in Richtung auf die Reinigung zu trichterförmig erweitert. Benachbarte Seitenwände der Windkanäle sind durch kurze Stirnwände untereinander verbunden. Die Stirnwände entfallen in der DE 24 23 917 A und US 2 954 123 A, da die Seitenwände der Windkanäle direkt miteinander verbunden sind.

In der als gattungsbildend angesehenen DE 14 03 495 A erweitern sich die Seitenwände der Windkanäle S-förmig nach außen. Die Seitenwände der Windkanäle schließen sich mit einer konvexen Krümmung an die Seitenwände der Gehäuse der Teilgebläse an. Die konvexe Krümmung geht dann etwa auf halber Länge der Seitenwände der Windkanäle in eine konkave Krümmung über, so dass die erwähnte S-Form entsteht. Die Stirnwände entfallen, da die Enden der Seitenwände direkt miteinander verbunden sind. Diese Anordnung wird als strömungstechnisch ausgebildet bezeichnet.

Die DE 102 46 858 A schlägt zur weiteren Verbesserung der Gleichmäßigkeit der Querverteilung der Intensität des Windes vor, die Seitenwände der Windkanäle in geradliniger Verlängerung zu den Seitenwänden des zugehörigen Gebläsegehäuses verlaufen zu lassen und die benachbarten Seitenwände der Windkanäle durch eine sich rechtwinklig zu den Seitenwänden des zugehörigen Gebläsegehäuses erstreckende Stirnfläche untereinander zu verbinden. Bei Ausführungsformen sind im Anschlussbereich zwischen den Seitenwänden der Windkanäle und der Stirnwand Radien vorgesehen, oder die Stirnfläche ist kreisbogenförmig ausgeführt.

### Aufgabe der Erfindung

Die der Erfindung zu Grunde liegende Aufgabe wird darin gesehen, ein verbessertes Radialgebläse für eine Reinigungseinrichtung für einen Mähdrescher bereitzustellen, die eine weitere Verbesserung der Gleichmäßigkeit der seitlichen Verteilung des erzeugten Luftstroms ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Seitenwände des Windkanals über ihre gesamte Länge, d. h. von dem Ende der Seitenwand des Gehäuses des Teilgebläses bis zu der Stelle, an der die Seitenwand des Windkanals direkt mit einer Seitenwand eines benachbarten Windkanals oder einer Stirnwand verbunden ist, an die wieder die Seitenwand des benachbarten Windkanals anschließt, konvex zu gestalten. Die äußeren Seitenwände der äußeren Windkanäle können auch an eine Seitenwand des Rahmens des Mähdreschers anschließen.

Es sind demnach in den Windkanälen keine spitze Abreißkanten vorhanden, an denen sich unerwünschte Wirbel bilden können. Die Windkanäle erweitern sich kontinuierlich nach außen, so dass der Luftstrom am stromab liegenden Ende der Windkanäle eine relativ große Breite hat, so dass sich die Windströme benachbarter Teilgebläse ohne Verwirbelungen vereinigen können. Die nach außen gekrümmte Form der Seitenwände erweist sich daher als strömungstechnisch besonders günstig, um eine über die Breite der Reinigungseinrichtung homogene Windverteilung zu erzeugen.

Die Seitenwände benachbarter Windkanäle können, wie bereits erwähnt, direkt oder durch eine Stirnwand untereinander verbunden werden. Im letztgenannten Fall kann die Stirnwand flach gestaltet sein und sich parallel zur Drehachse der Rotoren der Gebläse erstrecken, oder sie ist, wie die Seitenwände der Windkanäle, konvex gekrümmt.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einer Reinigungseinrichtung,
- Fig. 2: eine teilgeschnittene Draufsicht auf das Radialgebläse der Reinigungseinrichtung des Mähdreschers aus Figur 1, und
- Fig. 3: eine teilgeschnittene seitliche Ansicht des Radialgebläses aus der Figur 2.

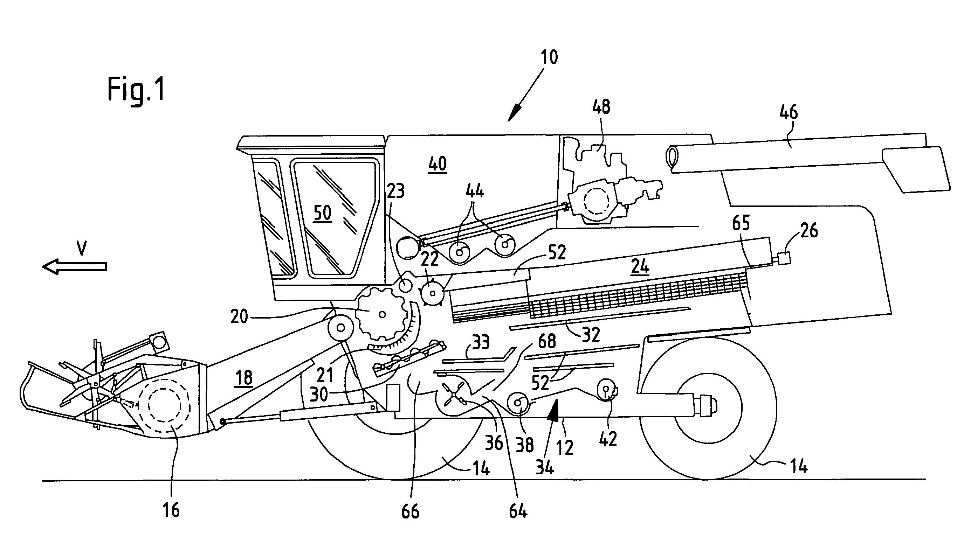

Die Figur 1 zeigt einen selbst fahrenden Mähdrescher 10 mit einem Rahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen.

An den vorderen Endbereich des Mähdreschers 10 ist eine Erntegutbergungsvorrichtung 16 in Form eines Schneidwerks angeschlossen, um Erntegut von dem Feld zu ernten und es nach oben und hinten durch einen Schrägförderer 18 Dresch- und Trennmitteln zuzuführen. Die Dresch- und Trennmittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 durch ein Mehrtrommeldreschwerk zu ersetzen oder sie wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Eine Abstreifrolle 23 und eine Wendetrommel 22 führen gemeinsam mit einem Zufuhrgehäuse das gedroschene Erntegut von der Dreschtrommel 20 und dem Dreschkorb 21 der Trenneinrichtung 24 in Form eines Axialabscheiders zu. Die Trenneinrichtung 24 wird an ihrer Rückseite durch ein Getriebe 26 angetrieben, das sie mit einem Verbrennungsmotor 48 antriebsmäßig verbindet. Als Trenneinrichtung 24 könnte auch ein Strohschüttler Verwendung finden. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus der Trenneinrichtung 24 austreten, fallen auf einen Schüttelboden 32, der sie zur Weitergabe auf den Vorbereitungsboden 33 führt. Der Vorbereitungsboden 33 gibt das Getreide und die Spreu einer Reinigungseinrichtung 34 mit in einem Siebkasten übereinander angeordneten Sieben 52 weiter. Der Reinigungseinrichtung 34 ist ein Radialgebläse 36 zugeordnet, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben und von einem Bediener aus einer Fahrerkabine 50 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Von der Trenneinrichtung 24 werden ausgedroschene Erntegutreste (Stroh) durch einen Auslass 65 an der Unterseite des rückwärtigen Endes des nach hinten geschlossenen Gehäuses der Trenneinrichtung 24 nach unten ausgeworfen. Sie können einem Strohhäcksler (nicht gezeigt) zugeführt werden.

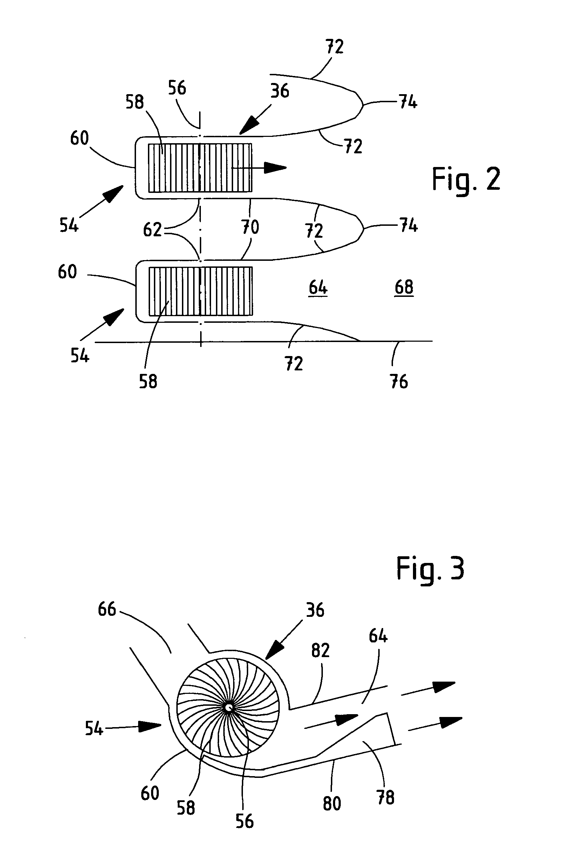

Das Radialgebläse 36 für die Reinigungseinrichtung 34 des Mähdreschers 10 umfasst mehrere radiale Teilgebläse 54, die auf einer gemeinsamen, durchgehenden Gebläsewelle 56 angeordnet und in bekannter Weise mit dem Verbrennungsmotor 48 antriebsmäßig verbunden sind. Die Gebläseturbine 58 jedes Teilgebläses 54 ist von einem separaten Gehäuse 60 mit einer im Bereich der Gebläsewelle 56 befindlichen Luftansaugöffnung 62 umschlossen, an das sich in tangentialer Anordnung ein Windkanal 64 und, im vorliegenden Ausführungsbeispiel, ein Nebenkanal 66 anschließen (s. Figuren 1 und 3). Über den Windkanal 64 werden die am Windkanalausgang 68 angrenzenden Siebe 52 der Reinigungseinrichtung 34 mit der erforderlichen Reinigungsluft beaufschlagt, die sowohl für die Feinreinigung der Körnerfrüchte als auch für den Austrag der Verunreinigungen in Form von Kurzstroh und Spreu dient. In an sich bekannter Weise wird über den Nebenkanal 66 ein weiterer Reinigungsluftstrom abgeleitet, der beispielsweise einer ersten Fallstufe zur Reinigung des vom Vorbereitungsboden 33 kommenden Gemisches aus Körnerfrüchten, Kurzstroh und Spreu zugeführt wird.

Die Gehäuse 60 umfassen die mit den Luftansaugöffnungen 62 versehene, sich parallel zueinander und senkrecht zur Gebläsewelle 56 erstreckende Seitenwände 70, die die Gebläseturbinen 58 jeweils von der Seite her abdecken und näherungsweise am radial äußeren Rand der Gebläseturbinen 58 enden. An die Seitenwände 70 der Gehäuse 60 schließen sich jeweils Seitenwände 72 des Windkanals 64 an, die den Windkanal 64 in seitlicher Richtung begrenzen und den Luftstrom führen. Die Seitenwände 72 schließen sich im Übergangsbereich zu den Seitenwänden 70 ohne Stufen mit einem relativ großen Krümmungsradius an die Seitenwände 70 an und sind dann über ihre gesamte Länge bis zu einer dem Windkanalausgang 68 zugewandten Stirnwand 74 hin konvex geformt, d. h. ihr Außenumriss ist nach außen hin gekrümmt. Auch die Stirnwand 74 ist konvex gebogen. Sie verläuft in ihrem Mittelpunkt parallel zur Gebläsewelle 56. Der Biegungsradius der Seitenwand 72 kann beispielsweise 500 mm betragen. Die nach außen gekrümmte Form der Seitenwände 72 des Windkanals 64 hat sich als strömungstechnisch besonders günstig erwiesen, um auf den Sieben 52 eine gleichmäßige Querverteilung der Windintensitäten zu erzielen.

Die Seitenwände 72 des Windkanals 64 erstrecken sich in vertikaler Richtung zwischen einem Bodenblech 80 und einem Deckblech 82 des Windkanals 64. Die in der Figur 2 unten eingezeichnete Stirnwand 74 liegt an einer Seitenwand 76 des Rahmens 12 des Mähdreschers 10 an. Wie anhand der Figur 3 erkennbar ist, befinden sich am Bodenblech 80 der Windkanäle 64 vertikal verlaufende Luftleitbleche 78, die sich entlang der Mittelachse der Windkanäle 64 erstrecken.

## Patentansprüche

1. Radialgebläse (36) für eine Reinigungseinrichtung (46) für einen Mähdrescher (10), mit mehreren Teilgebläsen (54), die jeweils in einem zugeordneten Gehäuse (60) angeordnet sind, an das sich je ein Windkanal (64) anschließt, der im Betrieb den vom Teilgebläse (54) erzeugten Luftstrom zu der Reinigungseinrichtung (34) leitet, wobei die Windkanäle (64) Seitenwände (72) aufweisen, die sich mit einer konvexen Krümmung an die Seitenwände (72) der Gehäuse (60) der Teilgebläse (54) anschließen und Seitenwände (72) benachbarter Windkanäle (64) an ihrem der Reinigungseinrichtung (34) zugewandten Ende untereinander verbunden sind, **dadurch gekennzeichnet, dass** die Seitenwände (72) der Windkanäle (64) über ihre gesamte Länge konvex gekrümmt sind.

2. Radialgebläse (36) nach Anspruch 1, **dadurch gekennzeichnet, dass** Seitenwände (72) benachbarter Windkanäle (64) an ihrem der Reinigungseinrichtung (34) zugewandten Ende durch eine flache oder konvex gekrümmte Stirnwand (74) untereinander verbunden sind.

3. Reinigungseinrichtung (34) mit einem Radialgebläse (36) nach Anspruch 1 oder 2.

4. Mähdrescher (10) mit einer Reinigungseinrichtung (34) nach Anspruch 3.

## Claims

1. Radial fan (36) for a cleaning device (34) of a combine (10), with a plurality of component fans (54) which are each arranged in an associated housing (60) which is adjoined by a respective wind duct (64) which, during operation, conducts the airstream generated by the component fan (54) to the cleaning device (34), wherein the wind ducts (64) have side walls (72) which are connected by a convex curvature to the side walls (72) of the housings (60) of the component fans (54), and side walls (72) of adjacent wind ducts (64) are connected to each other at the end thereof which faces the cleaning device (34), **characterized in that** the side walls (72) of the wind ducts (64) are curved convexly over the entire length thereof.

2. Radial fan (36) according to Claim 1, **characterized in that** side walls (72) of adjacent wind ducts (64) are connected to each other at the end thereof which faces the cleaning device (34) by means of a flat or convexly curved end wall (74).

3. Cleaning device (34) with a radial fan (36) according to Claims 1 or 2.

4. Combine (10) with a cleaning device (34) according to Claim 3.

## Revendications

1. Soufflante radiale (36) pour un dispositif de nettoyage (34) d'une moissonneuse-batteuse (10), comprenant plusieurs soufflantes partielles (54) qui sont disposées à chaque fois dans un boîtier associé (60) auquel se raccorde à chaque fois une soufflerie (64), qui conduit le courant d'air produit pendant le fonctionnement de la soufflante partielle (54) jusqu'au dispositif de nettoyage (34), les souffleries (64) présentant des parois latérales (72) qui se raccordent avec une courbure convexe aux parois latérales (72) du boîtier (60) de la soufflante partielle (54) et les parois latérales (72) de soufflantes adjacentes (64) étant connectées les unes aux autres au niveau de leur extrémité tournée vers le dispositif de nettoyage (34), **caractérisée en ce que** les parois latérales (72) des souffleries (64) sont courbées sous forme convexe sur toute leur longueur.

2. Soufflante radiale (36) selon la revendication 1, **caractérisée en ce que** des parois latérales (72) de souffleries adjacentes (64) sont connectées les unes aux autres au niveau de leur extrémité tournée vers le dispositif de nettoyage (34) par une paroi frontale (74) plate ou de courbure convexe.

3. Dispositif de nettoyage (34) comprenant une soufflante radiale (36) selon la revendication 1 ou 2.

4. Moissonneuse-batteuse (10) comprenant un dispositif de nettoyage (34) selon la revendication 3.
